# EUROPÄISCHE PATENTSCHRIFT

(11) **EP 3 018 633 B1**
(45) Veröffentlichungstag und Bekanntmachung des Hinweises auf die Patenterteilung: **31.12.2025**
(21) Anmeldenummer: 14191641.1
(22) Anmeldetag: 04.11.2014
(51) Int. Cl.: G06T 15/08

(54) **Verfahren zum visuellen Hervorheben von räumlichen Strukturen**
Method for visually highlighting spatial structures
Procédé de mise en évidence visuelle de structures spatiales

(43) Veröffentlichungstag der Anmeldung: 11.05.2016
(73) Patentinhaber: Siemens Healthineers AG, 91301 Forchheim (DE)
(72) Erfinder: Dingeldey, Felix, 91056 Erlangen (DE)
(74) Vertreter: Siemens Healthineers Patent Attorneys

(56) Entgegenhaltungen:
- WO-A2-2006/048802
- ANDREAS H. K�NIG ET AL: "Mastering transfer function specification by using VolumePro technology", INSTITUTE OF COMPUTER GRAPHICS AND ALGORITHMS, 1 March 2000 (2000-03-01), XP055062768, Retrieved from the Internet <URL:http://citeseerx.ist.psu.edu/viewdoc/download;jsessionid=EE762000720BC78D8288CEC64324DE75?doi=10.1.1.43.5954&rep=rep1&type=pdf> [retrieved on 20130514]
- MUSTAFA ALPER SELVER: "an object oriented transfer function editor for interactive medical volume visualization", 1 August 2005 (2005-08-01), pages 1 - 83, XP002515816, Retrieved from the Internet <URL:http://www.eee.deu.edu.tr/cislab/eksayfalar/personal%20pages/malpersel.htm> [retrieved on 20090216]
- PAUL MERRELL ET AL: "Interactive furniture layout using interior design guidelines", ACM SIGGRAPH 2011 PAPERS ON, SIGGRAPH '11, 1 January 2011 (2011-01-01), New York, New York, USA, pages 1, XP055187042, ISBN: 978-1-45-030943-1, DOI: 10.1145/1964921.1964982

## Beschreibung

Die vorliegende Erfindung betrifft ein Verfahren zum visuellen Hervorheben von räumlichen Strukturen in einem Volumendatensatz.

Die Druckschrift WO 2006/048802 A2 betrifft ein Verfahren zur Darstellung eines multidimensionalen Datensatzes. In einem Render-Prozess werden Anzeigewerte und Opazitätswerte einzelnen Datenelementen des multidimensionalen Datensatzes gemäß einer Transferfunktion zugewiesen.

Die Druckschrift Andreas H. König et al., "Mastering Transfer Function Specification by using VolumePro Technology", Institute of Computer Graphics, Vienna University of Technology, XP055062768, beschreibt ein neue Benutzerschnittstellenparadigma für die Spezifikation einer Transferfunktion.

Die Druckschrift Mustafa Alper Selver, "An Object oriented Transfer Function Editor for interactive medical Volume Visualization", Thesis submitted to the Graduate School of Natural and applied Sciences of Dokuz Eylül University in partial Fulfillment for the Degree of Master in electrical and electronics Engineering, betrifft die Visualisierung von dreidimensionalen, medizinischen Bilddaten mittels Transferfunktionen.

Volumendatensätze und deren dreidimensionale Darstellung spielen nicht nur in der Medizin sondern auch auf anderen Gebieten eine wichtige Rolle, wie beispielsweise der bei der Qualitätssicherung oder der Geologie. In einem skalaren Volumendatensatz entsprechen unterschiedliche Graustufenwerte unterschiedlichen Strukturen des ursprünglich aufgenommenen Objektes, wie beispielsweise unterschiedlichen Gewebearten in einem menschlichen Körper.

Direkte Volumen-Renderings (DVR - Direct Volume Rendrings) stellen ein Farbbild der unterschiedlichen Strukturen innerhalb eines Volumens durch Abbilden unterschiedlicher Datenwerte, beispielsweise Graustufenwerte, auf unterschiedliche Farben und Opazitäten dar. Im Wesentlichen klassifiziert diese Abbildung die unterschiedlichen Objekte, die innerhalb der Daten erfasst worden sind. Direkte Volumen-Renderings erlauben eine schnelle und effiziente Untersuchung dieser Objekte.

Die Abbildung von Datenwerten auf Farben und Opazitäten wird in einer Transferfunktion modelliert und typischerweise durch einen Satz stückweise linearer Funktionen dargestellt (PWL - Piecewise Linear Functions). Eine stückweise lineare Funktion umfasst Steuerpunkte, von denen jeder eine Farbe und eine Opazität an einer bestimmten Position in dem Datenhistogramm definiert. Positionen zwischen benachbarten Steuerpunkten werden linear interpoliert. Im Allgemeinen hängt die Qualität und Brauchbarkeit eines direkten Volumen-Renderings zum großen Teil von der Transferfunktion ab und davon wie diese die Strukturen von Interesse betont und uninteressante Bereiche verbirgt.

Daher ist die Qualität der Transferfunktion ein Schlüsselfaktor bei einem direkten Volumen-Rendering. Die Definition von geeigneten Transferfunktionen durch ein Modifizieren von Steuerpunkten der stückweise linearen Funktion ist eine zeitraubende und komplizierte Aufgabe. Dies ist der Mathematik der Lichtintegration geschuldet, die durch das direkte Volumen-Rendering approximiert wird. Diese ist hochgradig nichtlinear und macht die Vorhersage des visuellen Eindrucks eines direkten Volumen-Renderings schwierig.

Daneben ist die Natur der Transferfunktion und wie sich diese zum finalen Rendering verhält, ebenfalls nicht intuitiv. Die Transferfunktion ist in dem Datenbereich des Histogramms definiert. Demnach gibt die Form der stückweise linearen Funktionen und die Position der Steuerpunkte entlang der Datenachse keine Hinweise darauf, wo in dem Bild die klassifizierten Strukturen lokalisiert sind und wie sich diese gegenseitig verdecken. Das Verdecken von halbdurchsichtigen Objekten resultiert in einem Mischen von Farben in dem finalen Bild, das ebenfalls nicht aus der Datendomäne der Transferfunktion ersichtlich wird. Falls eine Software daher einen Benutzer dazu zwingt, die Steuerpunkte der stückweise linearen Funktion direkt zu ändern, ist der visuelle Effekt dieser Änderung kaum vorherzusagen. Dieses Vorgehen ist zeitaufwändig und stellt für unerfahrene Benutzer ein Problem dar.

Herkömmlicherweise musste der Benutzer die Werte der Transferfunktion direkt editieren. Falls die Abbildung von Farben und Opazitäten unter Verwenden von stückweise linearen Funktionen dargestellt wird, muss der Benutzer die Positionen, Farben und Opazitäten der der Steuerpunkte der stückweise linearen Funktionen editieren.

Es ist daher die Aufgabe der vorliegenden Erfindung, eine Hervorhebung von räumlichen Strukturen in dem Volumendatensatz zu verbessern.

Diese Aufgabe wird durch ein Verfahren zum visuellen Hervorheben von räumlichen Strukturen in einem Volumendatensatz gelöst, mit den Schritten eines Bereitstellens einer ersten Transferfunktion zum Abbilden von Datenwerten des Volumendatensatzes auf Farbwerte einer visuellen Darstellung; eines Bereitstellens einer Auswahlmöglichkeit zum Auswählen eines Parametersatzes durch einen Benutzer; eines Auswählen eines Parametersatzes durch Markieren eines Bereichs in einer grafischen Darstellung des Volumendatensatzes durch einen Benutzer; eines Weiterleiten des Parametersatzes an einen Algorithmus; eines Erzeugens einer zweiten Transferfunktion auf Basis der ersten Transferfunktion und des ausgewählten Parametersatzes; und eines Darstellens des Volumendatensatzes mittels der zweiten Transferfunktion.

Die erste Transferfunktion ist aus ein oder mehreren stückweise linearen Abschnitten zusammengesetzt, bei denen jeder stückweise lineare Abschnitt Steuerpunkte aufweist, die eine Position in dem Datenhistogramm der Datenwerte und Visualisierungsparameter definieren auf die die Datenwerte abgebildet werden. Das Auswählen des Parametersatzes durch Markieren des Bereichs in einer grafischen Darstellung des Volumendatensatzes durch den Benutzer erfolgt, indem auf ein dargestelltes DVR-Rendering gezeigt oder gemalt wird und zu ändernde Bereiche ausgewählt werden, um dadurch einen Bereich von Interesse in den Datenhistogramm zu definieren. Der Algorithmus ist zum Erzeugen der zweiten Transferfunktion auf Basis der ersten Transferfunktion ausgebildet ist. Der Bereich von Interesse wird zum Manipulieren von Steuerpunkten bei dem Erzeugen der zweiten Transferfunktion durch den Algorithmus bevorzugt.

Optional kann ein zeitgleiches, vergleichendes Darstellen des Volumendatensatzes mit der ersten und zweiten Transferfunktion durchgeführt werden. Dadurch wird der technische Vorteil erreicht, dass die Transferfunktion auf automatische Weise derart verändert werden kann, dass die räumlichen Strukturen innerhalb des Datensatzes besser visualisiert werden können. Die Strukturen können von einem Benutzer ohne genaue Kenntnis der Transferfunktion in besserer Weise sichtbar gemacht werden. Das Verfahren kann beispielsweise in einem medizinischen Gerät verwendet werden.

In einer vorteilhaften Ausführungsform ist die erste oder zweite Transferfunktion eine stückweise lineare Funktion. Dadurch wird beispielsweise der technische Vorteil erreicht, dass die Transferfunktion mit geringem Aufwand berechnet werden kann.

In einer weiteren vorteilhaften Ausführungsform ist der Parametersatz aus einer Mehrzahl vorgegebener Parametersätze auswählbar. Dadurch wird beispielsweise der technische Vorteil erreicht, dass der Parametersatz auf einfache Weise auf Basis einer Struktur ausgewählt werden kann, deren Darstellung verbessert werden soll. Beispielsweise kann in einer medizinischen Anwendung ein Parametersatz zur Verbesserung der Darstellung einer Haut oder ein Parametersatz zur Verbesserung der Darstellung eines inneren Organs ausgewählt werden.

Der Parametersatz ist durch Markieren eines Bereichs in einer graphischen Darstellung des Volumendatensatzes auswählbar. Dadurch wird beispielsweise der technische Vorteil erreicht, dass der Parametersatz auf einfache Weise auf Basis einer Struktur ausgewählt werden kann, deren Darstellung verbessert werden soll.

In einer weiteren vorteilhaften Ausführungsform ist der Parametersatz auf Basis einer graphischen Darstellung der ersten Transferfunktion auswählbar. Dadurch wird beispielsweise der technische Vorteil erreicht, dass der Parametersatz auf einfache Weise auf Basis einer Struktur ausgewählt werden kann, deren Darstellung verbessert werden soll.

In einer weiteren vorteilhaften Ausführungsform ist die erste Transferfunktion aus einer Mehrzahl vorgegebener Transferfunktionen auswählbar. Dadurch wird beispielsweise der technische Vorteil erreicht, dass die nicht ausgewählte Teilmenge der ersten Transferfunktion konstant bleibt und dass eine schnelle und effiziente Berechnung der zweiten Transferfunktion ermöglicht wird.

In einer weiteren vorteilhaften Ausführungsform ist die erste Transferfunktion aus einem Teilbereich einer stückweise linearen Funktion auswählbar. Dadurch wird beispielsweise der technische Vorteil erreicht, dass der nicht ausgewählte Teilbereich der stückweise linearen Funktion der ersten Transferfunktion konstant bleibt und die zweite Transferfunktion mit einer geringen Anzahl von Rechenschritten erzeugt werden kann.

In einer weiteren vorteilhaften Ausführungsform wird eine Mehrzahl an zweiten Transferfunktionen auf Basis der ersten Transferfunktion und des ausgewählten Parametersatzes erzeugt. Dadurch wird beispielsweise der technische Vorteil erreicht, dass eine passende zweite Transferfunktion ausgewählt werden kann.

In einer weiteren vorteilhaften Ausführungsform wird für jede der zweiten Transferfunktionen ein Vorschaubild erzeugt. Dadurch wird beispielsweise der technische Vorteil erreicht, dass der Benutzer in der Lage ist, das Ergebnis jeder zweiten Transferfunktion visuell zu begutachten.

In einer weiteren vorteilhaften Ausführungsform ist das Vorschaubild auswählbar, um ein Darstellen des Volumendatensatzes mit der jeweiligen zweiten Transferfunktion zu bewirken. Dadurch wird beispielsweise der technische Vorteil erreicht, dass sich die Strukturen innerhalb der Volumendaten genau darstellen lassen.

In einer weiteren vorteilhaften Ausführungsform Verfahren wird der Volumendatensatz mit der ersten Transferfunktion zeitgleich zu dem Volumendatensatz mit der zweiten Transferfunktion dargestellt wird. Dadurch wird beispielsweise der technische Vorteil erreicht, dass eine zusätzliche, vergleichende Darstellung des Volumendatensatzes mit der ersten Transferfunktion bewirkt wird.

In einer weiteren vorteilhaften Ausführungsform wird die zweite Transferfunktion durch ein Ändern der Position eines Steuerpunktes auf der horizontalen oder vertikalen Achse der ersten Transferfunktion erzeugt. Dadurch wird beispielsweise der technische Vorteil erreicht, dass die zweite Transferfunktion mit geringem Rechenaufwand erzeugt werden kann.

In einer weiteren vorteilhaften Ausführungsform wird die zweite Transferfunktion durch ein Ändern der Farbe eines einzelnen Steuerpunktes der ersten Transferfunktion erzeugt.

Dadurch wird beispielsweise ebenfalls der technische Vorteil erreicht, dass die zweite Transferfunktion mit geringem Rechenaufwand erzeugt werden kann.

In einer weiteren vorteilhaften Ausführungsform wird die zweite Transferfunktion durch ein Ändern des Beginns und Endes der ersten Transferfunktion erzeugt. Dadurch wird beispielsweise ebenfalls der technische Vorteil erreicht, dass die zweite Transferfunktion mit geringem Rechenaufwand erzeugt werden kann.

In einer weiteren vorteilhaften Ausführungsform wird die zweite Transferfunktion durch eine Streckung oder Stauchung der ersten Transferfunktion auf der horizontalen oder vertikalen Achse erzeugt. Dadurch wird beispielsweise ebenfalls der technische Vorteil erreicht, dass die zweite Transferfunktion mit geringem Rechenaufwand erzeugt werden kann.

Gemäß einem zweiten Aspekt wird die Aufgabe durch ein medizinisches Gerät zum Durchführen des Verfahrens nach dem ersten Aspekt gelöst. Das medizinische Gerät ist in der Lage einen Volumendatensatz zu erzeugen, beispielsweise von einem untersuchten Gewebe. Das medizinische Gerät kann beispielsweise eine Magnetresonanztomographiegerät, ein Computertomographiegerät oder ein Ultraschallgerät sein. Dadurch werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen:
- Fig. 1: ein Verfahren zur Verbesserung der visuellen Hervorhebung von räumlichen Strukturen;
- Fig. 2: ein Aktivitätsdiagramm, das die Benutzer-Systeminteraktion zeigt;
- Fig. 3: ein Diagramm möglicher Komponenten und deren Beziehungen;
- Fig. 4: eine Darstellung eines DVR-Renderings;
- Fig. 5: eine Darstellung eines Bereichs von Interesse innerhalb des DVR-Renderings;
- Fig. 6: eine Definition eines Bereiches von Interesse innerhalb der Benutzerschnittstellensteuerung;
- Fig. 7: ein Layout einer Benutzerschnittstelle; und
- Fig. 8: ein alternatives Layout einer Benutzerschnittstelle.

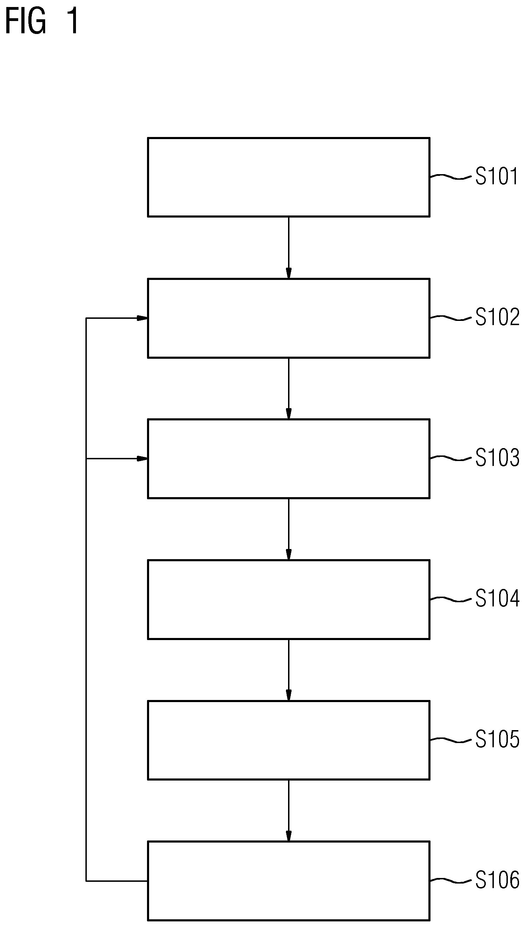

Fig. 1 zeigt ein Verfahren zur Verbesserung der visuellen Hervorhebung von räumlichen Strukturen in einem Volumendatensatz. Das Verfahren kann in einem medizinischen Gerät verwendet werden, dass einen dreidimensionalen Datensatz erzeugt, um bestimmte Bereiche aus den Volumendaten bei einer medizinischen Untersuchung besser hervorzuheben, wie beispielsweise bestimmte innere Organe.

In Schritt S101 erfolgt zunächst ein Auswählen und Bereitstellen einer ersten Transferfunktion zum Abbilden von Datenwerten des Volumendatensatzes auf Farbwerte einer visuellen Darstellung.

Die erste Transferfunktion kann eine Funktion mit einem oder mehreren stückweise linearen Abschnitten sein. Ein Benutzer kann die erste Transferfunktion auswählen, beispielsweise diejenige Transferfunktion, die gerade in der DVR-Anwendung verwendet wird. Es ist ebenfalls möglich, dass ein Benutzer lediglich eine Untermenge der stückweise linearen Abschnitte aus einer größeren Transferfunktion auswählt. Die nicht ausgewählten stückweise linearen Abschnitte bleiben dann unverändert.

In Schritt S102 wird dem Benutzer eine Auswahlmöglichkeit zum Auswählen eines Parametersatzes bereitgestellt, die domänenspezifische Hinweise zum Manipulieren oder Verändern der ersten Transferfunktion darstellen. Die Parametersätze werden an einen Algorithmus zum Erzeugen einer zweiten Transferfunktion auf Basis der ersten Transferfunktion weitergeleitet. Diese werden verwendet, um den Algorithmus anzuweisen, dass die erzeugte zweite Transferfunktion schneller an das gewünschte Endresultat konvergiert. Der Parametersatz dient beispielsweise dazu, die Bereiche der Transferfunktion zu gewichten, um den Einfluss des Algorithmus zu steuern. In ausgewählten Graustufenbereichen ist der Einfluss höher als in anderen.

Ausgehend von einer existierenden ersten Transferfunktion möchte der Benutzer üblicherweise einen spezifischen Aspekt der Visualisierung ändern, wie beispielsweise um bestimmte Strukturen in dem Datensatz hervorzuheben oder andere zu verbergen, indem diesen eine Transparenz zugewiesen wird. Im medizinischen Bereich kann der Benutzer beispielsweise wünschen, beim Rendern bestimmte Organe in einem Unterleibsdatensatz hervorzuheben oder Haut- und Muskelgewebe zu verbergen. Zur Qualitätssicherung im industriellen Bereich kann der Benutzer wünschen, Risse in einem bestimmten Material hervorzuheben.

Das Bereitstellen des Parametersatzes kann auf unterschiedliche Art und Weise erfolgen:
In einer ersten Weise kann der Benutzer einen Parametersatz aus einer Mehrzahl vorgegebener Parametersätze auswählen, beispielsweise indem der Benutzer eine Option aus einer vorbestimmten Menge an Alternativen auswählt, d.h. durch Setzen eines Hakens in einer Auswahlbox einer grafischen Benutzerschnittstelle. Dies ist für Anwendungen geeignet, in denen die Volumendaten und die Strukturen bekannt sind. Beispielsweise ist es in einer spezialisierten medizinischen Befundungsanwendung bekannt, welche Arten von Strukturen die Volumendaten umfassen. In diesem Fall kann die Anwendung mehrere Parametersätze bereitstellen, beispielsweise für Organe oder Gewebetypen, aus denen der Benutzer auswählen kann.

Der Benutzer wählt einen Parameterdatensatz durch Markieren eines Bereichs in einer graphischen Darstellung des Volumendatensatzes aus. Dabei werden die Änderungen der ersten Transferfunktion auf einen bestimmten Bereich in dem Datenhistogramm fokussiert, indem auf ein dargestelltes DVR-Rendering gezeigt oder gemalt wird und zu ändernde Bereiche ausgewählt werden. Jede Mausbewegung kann eine Strahlauswahlaktion (Ray Picking Aktion) in dem Datensatz bewirken und die entsprechende Position in dem Datenbereich des Histogramms berechnen. Nach mehreren Strahlauswahlaktionen wird der Benutzer einen Bereich von Interesse in dem Histogramm definieren, der dann zum Manipulieren von Steuerpunkten durch den Algorithmus bevorzugt wird. Zum Beispiel kann die Dichteverteilung der Probenpunkte in dem Datenbereich des Histogramms eine Wichtigkeit der Steuerpunkte definieren.

In einer dritten Weise ist der Parametersatz auf Basis einer graphischen Darstellung der ersten Transferfunktion auswählbar. Dabei kann der Benutzer ebenfalls einen Bereich von Interesse direkt aus der Visualisierung der ersten Transferfunktion auswählen. Beispielsweise kann der Benutzer Start- und Enddatenwerte des Intervalls als Parametersatz definieren. Statt diese als harte Grenzen zu nehmen, kann ein weicher Abfall der Wichtigkeit verwendet werden. In diesem Fall arbeitet der Benutzer mit der Transferfunktion in einer direkteren Weise.

In Schritt S103 wird eine zweite, geänderte Transferfunktion auf Basis der ersten Transferfunktion und des ausgewählten Parametersatzes erzeugt. Der Algorithmus erzeugt beispielsweise einen Satz an zweiten Transferfunktionen, von denen jeder eine geänderte Version der ursprünglichen ersten Transferfunktion ist. Basierend auf dem Parametersatz als domänenspezifischer Hinweis bevorzugt der Algorithmus Steuerpunkte der stückweise linearen Funktion in dem Bereich von Interesse. In diesem Bereich wird die Transferfunktion stärker geändert als außerhalb dieses Bereiches.

In Schritt S104 wird dem Benutzer eine Vorschau des Renderings angezeigt. Für jede der erzeugten zweiten Transferfunktionen wird ein DVR-Rendering als Vorschau erzeugt und dem Benutzer angezeigt. Wenn eine bestimmte Vorschau ausgewählt wird, kann das System Vorher- und Nachher-Vergleiche der DVR-Renderings der Transferfunktion bereitstellen.

In Schritt S105 kann ein optionales manuelles Editieren der stückweise linearen Funktionen erfolgen. Für erfahrene Benutzer kann das System ein Steuerelement als Benutzerschnittstelle bereitstellen, das es dem Benutzer erlaubt, die erzeugte zweite Transferfunktion direkt zu editieren.

In Schritt S106 wählt der Benutzer das geeignetste Rendering aus dem Satz von Vorschaubildern aus und der Volumendatensatz wird mittels der jeweiligen zweiten Transferfunktion dargestellt. Falls die Anforderungen an die Darstellung erfüllt sind, endet das Verfahren. Ansonsten dient die erzeugte zweite Transferfunktion als neue Basis für eine weitere Iteration, bei der erneut mit Schritt S102 oder S103 zur Verfeinerung begonnen wird.

Um die neue Transferfunktion zu erzeugen, verändert der verwendete Algorithmus die Steuerpunkte der stückweise linearen Abschnitte der zugrundeliegenden Transferfunktion unter Berücksichtigung des ausgewählten Parametersatzes.

Hierbei kann beispielsweise der Ort eines einzelnen Steuerpunktes auf der horizontalen Achse verändert werden, d.h. dessen Datenwert. Der Ort eines einzelnen Steuerpunktes kann auf der vertikalen Achse verändert werden, d.h. dessen Opazität. Die Farbe eines einzelnen Steuerpunktes kann verändert werden. Der Ort einer vollständigen stückweise linearen Kurve kann verändert werden. Der Ort eines Anfangs und eines Endes einer stückweise linearen Kurve kann verändert werden, d.h. eine Verschiebung von lediglich Beginn- und/oder Endpunkten. Eine vollständige lineare Kurve kann horizontal gestaucht oder gestreckt werden, d.h. das abgedeckte Intervall der Datenpunkte. Eine vollständige lineare Kurve kann vertikal gestaucht oder gestreckt werden, d.h. die gesamte Opazität der Kurve. Die vertikale Position von Liniensegmenten einer stückweise linearen Kurve kann verändert werden, d.h. die Opazität eines Kurvensegments.

Obwohl oben Farben und Opazitäten als Eigenschaften der Steuerpunkte verwendet werden, können auch andere mögliche Eigenschaften der Steuerpunkte geändert werden. Nichtsdestotrotz sind Farbe und Opazität wichtige Eigenschaften von Steuerpunkten in der Transferfunktion. Im Allgemeinen können unterschiedliche Algorithmen zum Durchführen einer Manipulation der Transferfunktion verwendet werden. Mehrere Benutzerschnittstellenelemente können den Benutzer durch den Prozess eines Beurteilens der erzeugten Vorschau-Renderings führen. Wenn ein Vorschau-Rendering ausgewählt wird, kann das System die neue Transferfunktion und die stückweise linearen Abschnitte in einem Vorher-Nachher-Vergleich anzeigen, mit dem gezeigt wird, wie der Algorithmus die Transferfunktion verändert hat. Weiter kann ein vergrößertes Rendering mit interaktiver Navigation (Zoom, Drehung) des Vorschauminiaturbildes angezeigt werden. Weiter kann ein vergrößertes, synchronisiertes Vorher-Nachher-Rendering mit interaktiver Navigation unter Verwendung der ursprünglichen ersten Transferfunktion auf der einen Seite und der erzeugten Transferfunktion des ausgewählten Vorschaubildes auf der anderen Seite angezeigt werden. Dies erlaubt es einem Benutzer, die visuellen Eindrücke des neuen Renderings direkt zu vergleichen.

Das Verfahren stellt ein bildbasiertes Verfahren zum Manipulieren existierender Transferfunktionen dar. Die Transferfunktion kann aus ein oder mehreren stückweise linearen Abschnitten zusammengesetzt sein, bei denen jeder stückweise lineare Abschnitt Steuerpunkte aufweist, die eine Position in dem Datenhistogramm und Visualisierungsparameter definieren, beispielsweise Farbe und Opazität. Allerdings können auch andere Arten von Transferfunktionen verwendet werden, beispielsweise bei denen jeder Datenwert innerhalb des Volumens explizit auf Visualisierungsparameter abgebildet wird. In gleicher Weise ist das Verfahren ebenfalls auf höherdimensionale Transferfunktionen anwendbar, beispielsweise zweidimensionale oder dreidimensionale Transferfunktionen, die den Betrag der Größe eines Gradienten oder die Hauptkrümmungsrichtungen als zusätzliche Argumente neben den skalaren Datenwerten verwenden. Das Verfahren schließt die Erfahrung eines Benutzers ein, indem es erlaubt, spezifische Parametersätze hinsichtlich einer Darstellung grafisch auszuwählen oder zu definieren. Diese Parametersätze werden verwendet, um die Erzeugung weiterer Transferfunktionen durchzuführen und um den Suchraum zu verringern.

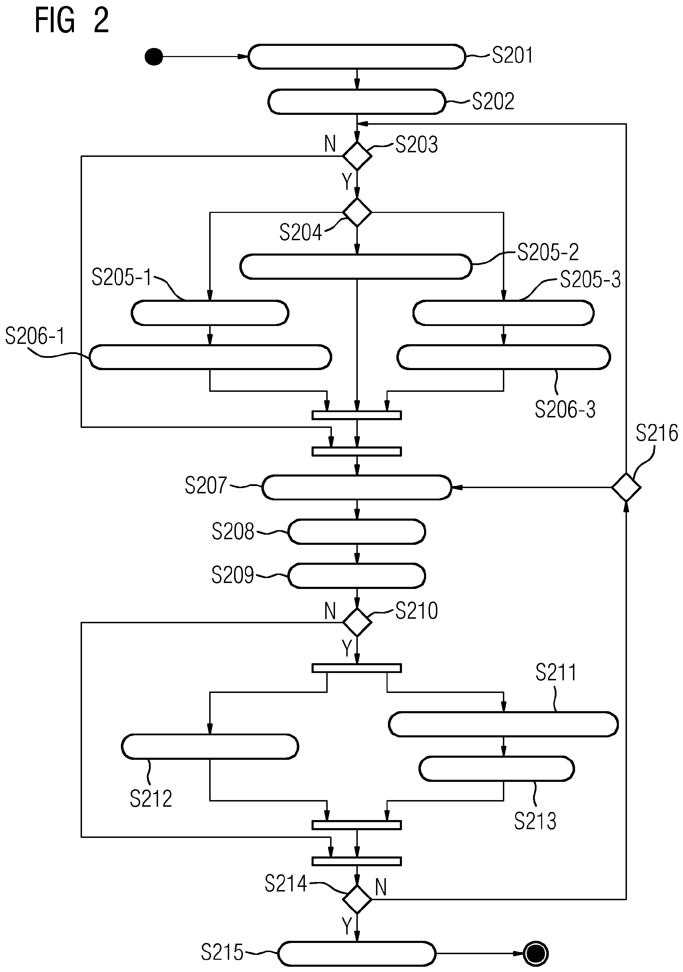

Fig. 2 zeigt ein Aktivitätsdiagramm, das die Benutzer-Systeminteraktion zeigt. Diese dynamische Ansicht auf das System zeigt, wie das System und der Benutzer im Laufe eines Veränderns der Transferfunktion zusammenwirken. Nachdem eine erste Transferfunktion mit einem Satz stückweise linearer Funktionen in Schritt S201 ausgewählt worden ist, möchte ein Benutzer diese Transferfunktion verändern. Zu diesem Zweck öffnet sich ein PWL-Manipulationsmodul als grafische Benutzerschnittstelle in Schritt S202. In Schritt S203 wird gefragt, ob ein Benutzer aus mehreren vorgeschlagenen Optionen zum Spezifizieren domänenspezifischer Parametersätze auswählen möchte. Danach wird in Schritt S204 nach einer der konkreten Option gefragt, nämlich Bestimmen eines Bereiches von Interesse durch Zeichnen in dem Volumen, Bestimmen eines Bereiches von Interesse durch eine Benutzerschnittstelle der Transferfunktion oder manuelles Auswählen eines domänenspezifischen Parametersatzes.

Bei der ersten Option wird zu Schritt S205-1 verzweigt, in dem der Benutzer auf dem DVR-Rendering zeichnen kann. In Schritt 206-1 werden Auswahlpunkte als Parametersatz gesammelt, die eine Wichtigkeit des Datenbereiches darstellen. Bei der zweiten Option wird zu Schritt S205-2 verzweigt, bei der der Benutzer einen Bereich von Interesse in der Benutzerschnittstellensteuerung der Transferfunktion als Parametersatz definieren kann. Bei der dritten Option wird zu Schritt S205-3 verzweigt, bei dem der Benutzer einen domänenspezifischen Parametersatz spezifizieren kann. In Schritt S206-3 wird der Bereich von Interesse basierend auf diesem Parametersatz ausgewählt.

In Schritt S207 wird ein Satz geänderter Transferfunktionen auf Basis der ursprünglichen Transferfunktion und des ermittelten Parametersatzes erzeugt. In Schritt S208 werden DVR-Vorschaubilder erzeugt. Dabei ändert der Algorithmus die Parameter der stückweise linearen Abschnitte, rendert DVR-Vorschauminiaturbilder und zeigt diese dem Benutzer an.

In Schritt S209 wählt der Benutzer ein Vorschaubild aus. In Schritt S210 wird gefragt, ob eine nähere Untersuchung erforderlich ist. In Schritt S211 wird ein interaktives Vorher-Nachher-DVR-Rendering angezeigt. In Schritt S212 werden Vorher-Nachher-Transferfunktionen angezeigt. In Schritt S213 navigiert der Benutzer in den Renderings. Wenn ein DVR-Vorschauminiaturbild ausgewählt wird, hat der Benutzer somit die Möglichkeit, den visuellen Eindruck der ausgewählten Vorschau mit dem Original unter Verwendung entweder des interaktiven Vorher-Nachher-DVR-Renderings oder einer Vorher-Nachher-Anzeige der Transferfunktionen zu vergleichen.

In Schritt S214 wird bestimmt, ob die neue Transferfunktion geeignet ist. Falls dies der Fall ist wird zu Schritt S215 verzweigt, in dem das Manipulationsmodul für die Transferfunktion geschlossen wird. Der Benutzer ist mit der Lösung zufrieden und die erzeugte Transferfunktion der ausgewählten Vorschau wird gespeichert.

Falls dies nicht der Fall ist wird zu Schritt S216 verzweigt, bei dem Bestimmt wird, ob die der domänenspezifische Parametersatz behalten oder verfeinert werden soll. Der Benutzer kann mit der Optimierung fortfahren und tritt in eine nachfolgende Iteration des Verfahrens ein. Falls der Parametersatz behalten werden soll, wird erneut zu Schritt S207 verzweigt. Falls der Parametersatz verfeinert werden soll, wird zu Schritt S203 verzweigt und die jeweiligen Schritte werden wiederholt.

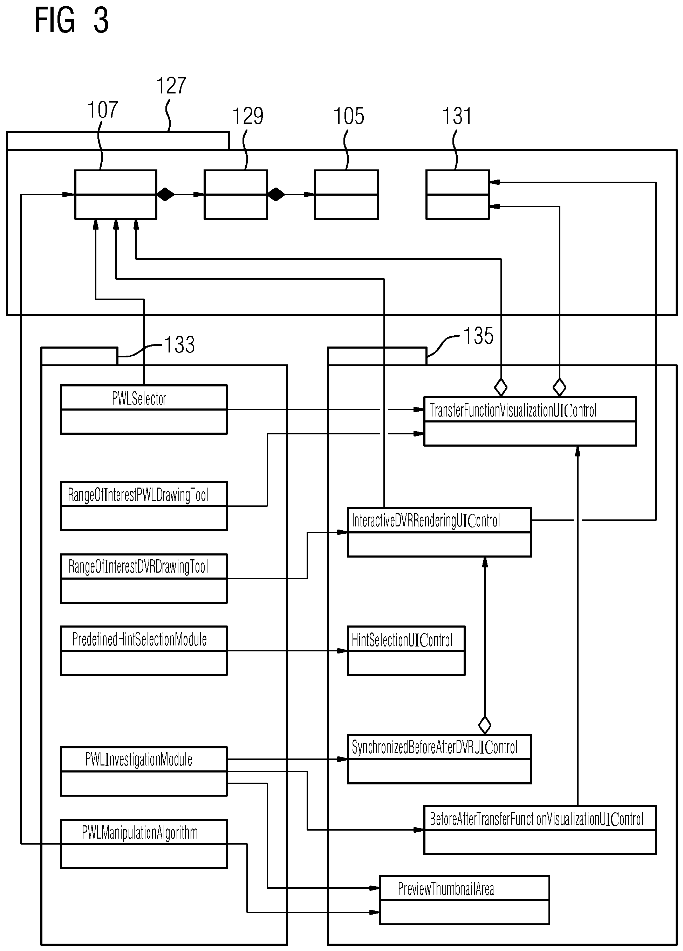

Fig. 3 zeigt ein Diagramm möglicher Komponenten und deren Beziehungen. Das Datenpaket 127 umfasst die Datenbasis, wie beispielsweise die Transferfunktion 107, die aus ein oder mehreren stückweise linearen Abschnitten 129 zusammengesetzt ist, die Steuerpunkte 105 und die dreidimensionalen Volumendaten 131.

Mehrere Aspekte werden durch Komponenten in dem Paket des PWL-Manipulationsmoduls 133 und der Benutzerschnittstellenelemente 135 modelliert. Diese Komponenten werden ebenfalls in den Aktionen in dem dynamischen Aktivitätsdiagramm aus Fig. 2 widergespiegelt.

Die Komponente *PWLSelector* erlaubt es einem Benutzer, eine Transferfunktion 107 oder einzelne stückweise linearen Abschnitte 129 aus dieser auszuwählen, die manipuliert und verändert werden sollen. Diese verwendet die Komponente *TransferFunctionvisualizationUIControl.* Die folgenden drei Komponenten in dem PWL-Manipulationsmodul 133 *- RangeOfInterest-PWLDrawingTool, RangeO£InterestDVRDrawingTool* und *PredefinedHintSelectionTool* - behandeln die Definition der domänenspezifischen Parametersätze. Diese verwenden unterschiedliche Benutzerschnittstellensteuerungen für diese Aufgabe, beispielsweise die Anzeige einer Combobox, ein pinselartiges Zeichnen in einem DVR-Rendering-Fenster oder die Spezifikation eines Intervalls in der Benutzerschnittstellensteuerung einer Transferfunktion.

Intelligente Algorithmen bilden die Parameterdatensätze auf Bereiche in dem Histogramm ab. Die Komponente *PWLManipulationAlgorithm* stellt den Kern des Systems dar, da diese die Änderungen der ausgewählten Transferfunktion erzeugt und das Rendern der Vorschauminiaturbilder auslöst. Die Komplexität ist in dem Diagramm abstrahiert, da Algorithmen zum Manipulieren der Transferfunktion verwendet werden.

Schließlich erlaubt es die Komponente *PWLInvestigationModule* dem Benutzer, ausgewählte Vorschaubilder näher zu untersuchen, beispielsweise durch nebeneinander Anzeigen der Vorschau und des ursprünglichen DVR-Renderings oder durch Zeigen der Unterschiede in der Transferfunktion.

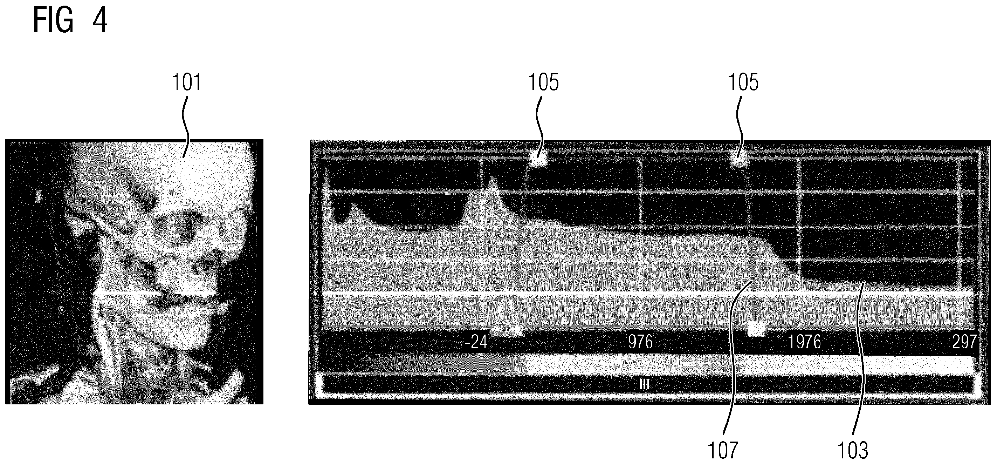

Fig. 4 zeigt eine Darstellung 101 eines DVR-Renderings eines Volumendatensatzes mit zugehöriger Transferfunktion 107. Die Transferfunktion 107 umfasst zwei stückweise lineare Abschnitte (PWLs), die auf einem skalaren Datenhistogramm 103 der Daten gezeichnet sind. Die Höhe der Steuerpunkte 105 zeigt deren Opazität an. Im unteren Bereich sind die linear interpolierten Farben entlang der X-Achse aufgetragen.

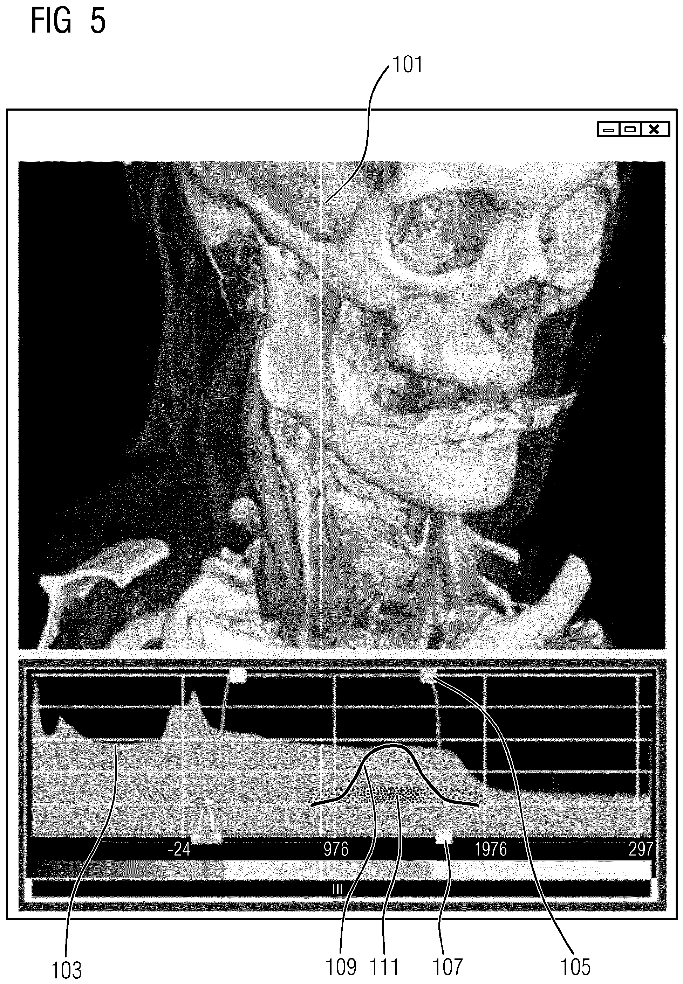

Fig. 5 zeigt eine Darstellung 101 eines Bereichs von Interesse innerhalb des DVR-Renderings und eine angezeigte Dichteverteilung 109 ausgewählter Punkte 111 in dem Datenhistogramm 103. Ein Benutzer kann den Bereich von Interesse innerhalb eines DVR-Rendering-Fensters auswählen, indem dieser eine Mehrzahl von Punkten 111 aus diesem Bereich erzeugt, beispielsweise jeweils mit einem Mausklick in das DVR-Rendering-Fenster. Dies entspricht der Komponente *RangeOfInterestDVRDrawingTool.* Auf Basis dieser Punkte 111 wird die Dichteverteilung 109 berechnet. Die einzelnen ausgewählten Punkte 111 sind in dem Datenhistogramm 103 gezeigt. Die Benutzerschnittstellensteuerung der Transferfunktion 107, die unterhalb der Darstellung 101 gezeigt ist, zeigt eine mögliche Visualisierung des resultierenden Bereichs von Interesse an und die Wichtungskurve, die aus der Dichteverteilung 109 der ausgewählten Punkte 111 berechnet wird. Die genaue Anordnung der Punkte und der Wichtungskurve entlang der vertikalen Achse ist im Allgemeinen beliebig.

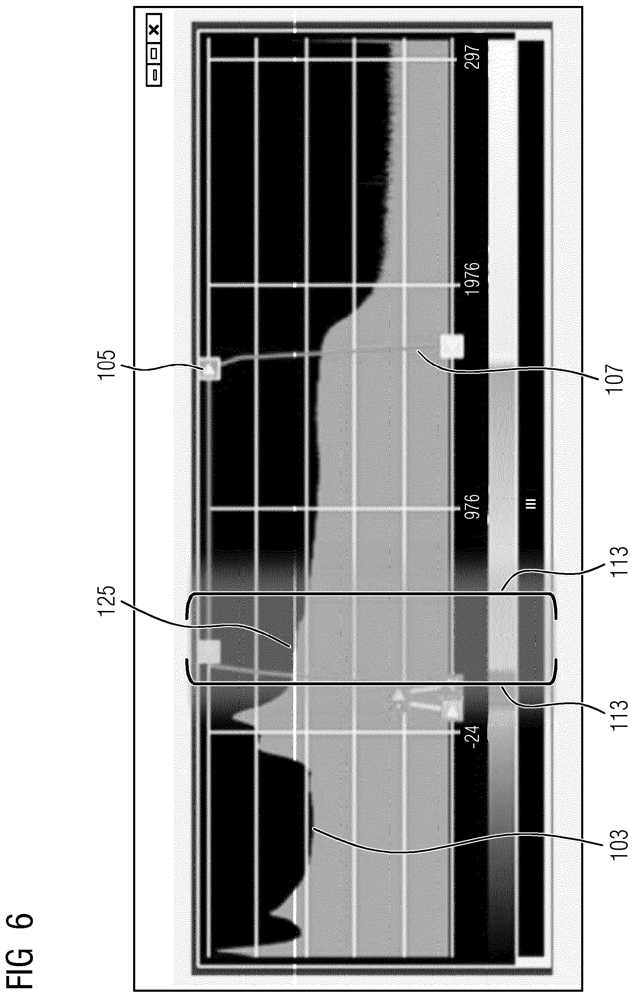

Fig. 6 zeigt eine Definition eines Bereiches von Interesse 125 innerhalb der Benutzerschnittstellensteuerung der Transferfunktion 107. Eine mögliche Realisierung einer Benutzerschnittstellensteuerung erlaubt es dem Benutzer, einen Bereich von Interesse 125 innerhalb der Benutzerschnittstellensteuerung der Transferunktion 107 zu spezifizieren. Dies entspricht der Komponente *RangeOfInterestDVRDrawingTool.* Der Benutzer setzt die Position des Starts und des Endes eines Intervalls, das mit Klammern 113 eingegrenzt wird und den Bereich von Interesse 125 angibt. Innerhalb dieses Intervalls ist die Wirkung des Algorithmus am ausgeprägtesten. Links und rechts des Intervalls nimmt die Wirkung des Algorithmus zunehmend ab.

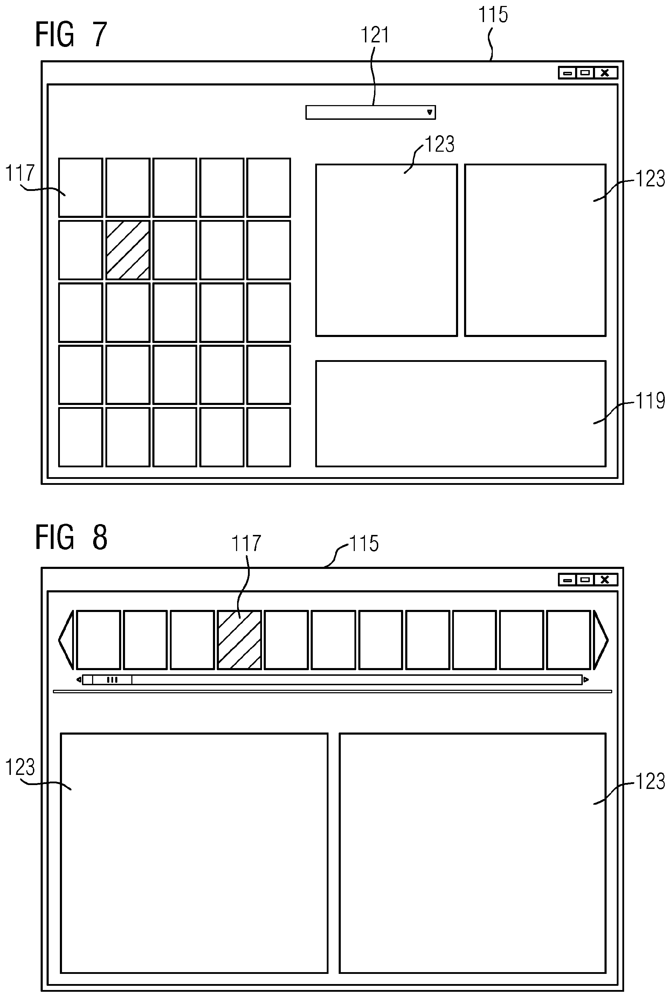

Fig. 7 zeigt ein Layout einer Benutzerschnittstelle 115 mit vordefinierter domänenspezifischer Auswahl des Parametersatzes. Das Layout für die Benutzerschnittstelle 115 dient zum Darstellen und Anzeigen der erzeugten DVR-Vorschauminiaturbilder 117 und der Benutzerschnittstelle des Vorher-Nachher-DVR-Vergleichs 119 an einen Benutzer.

Die obere Auswahl 121 ermöglicht es dem Benutzer, domänenspezifische Parametersätze unter Verwendung einer Combobox-Steuerung zu spezifizieren. Dieser Bereich entspricht den Komponenten *PredefinedHintSelectionTool* und *Hint-SeleotionUIControl.* Der linke Bereich zeigt einen Satz von DVR-Vorschauminiaturbildern 117 an und entspricht der Komponente *PreviewThumbnailArea.* Die Miniaturbilder 117 werden mit den Transferfunktionen gerendert, die durch den Algorithmus erzeugt worden sind. Wenn der Benutzer ein DVR-Vorschauminiaturbild 117 auswählt, werden der Vorher-Nachher-DVR-Vergleich 119 und die Transferfunktionsvergleich-Benutzerschnittstellensteuerung 123 auf der rechten Seite ausgefüllt. Diese Aspekte werden durch die Komponenten *PWLInvestigationModule* und *SynchronizedBeforeAfterDVRUIControl* und *Be£oreAfterTransferFunctionVisualizationUIControl* dargestellt.

Fig. 8 zeigt ein alternatives Layout einer Benutzerschnittstelle 115 mit verschiebbaren DVR-Vorschauminiaturbildern 117 und einem vergrößerten Vorher-Nachher-DVR-Vergleich 119. Dabei wird der Vergleich des visuellen Eindrucks des ursprünglichen und des ausgewählten DVR-Renderings hervorgehoben.

Die Anordnung der DVR-Vorschauminiaturbilder 117 ist unterschiedlich. Der Benutzer kann die DVR-Vorschauminiaturbilder 117 horizontal verschieben. Die Spezifikation von domänenspezifischen Parametersätzen ist in diesem Layout der Benutzerschnittstelle 115 verborgen und wird mit einer separaten Benutzerschnittstelle dargestellt. Im Allgemeinen können jedoch auch andere mögliche Layouts verwendet werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 101: Darstellung
- 103: Datenhistogramm
- 105: Steuerpunkte
- 107: Transferfunktion
- 109: Dichteverteilung
- 111: Punkte
- 113: Klammer
- 115: Benutzerschnittstelle
- 117: Vorschauminiaturbild
- 119: Vorher-Nachher-DVR-Vergleichs
- 121: Auswahl
- 123: Benutzerschnittstellensteuerung
- 125: Bereich von Interesse
- 127: Datenpaket
- 129: stückweise linearer Abschnitt
- 131: Volumendaten
- 133: Manipulationsmodul
- 135: Benutzerschnittstellenelemente

- S101-S107: Verfahrensschritte
- S201-S216: Verfahrensschritte

## Patentansprüche

1. Verfahren zum visuellen Hervorheben von räumlichen Strukturen in einem Volumendatensatz, mit den Schritten:
Bereitstellen (S101) einer ersten Transferfunktion (107) zum Abbilden von Datenwerten des Volumendatensatzes auf Farbwerte einer visuellen Darstellung (101), wobei die erste Transferfunktion aus ein oder mehreren stückweise linearen Abschnitten zusammengesetzt ist, bei denen jeder stückweise lineare Abschnitt Steuerpunkte aufweist, die eine Position in dem Datenhistogramm der Datenwerte und Visualisierungsparameter definieren auf die die Datenwerte abgebildet werden;
Bereitstellen (S102) einer Auswahlmöglichkeit zum Auswählen eines Parametersatzes durch einen Benutzer, bei dem der Parametersatz durch Markieren eines Bereichs in einer graphischen Darstellung (101) des Volumendatensatzes auswählbar ist;
Auswählen eines Parametersatzes durch Markieren eines Bereichs in einer grafischen Darstellung des Volumendatensatzes durch einen Benutzer, indem auf ein dargestelltes DVR-Rendering gezeigt oder gemalt wird und zu ändernde Bereiche ausgewählt werden, um dadurch einen Bereich von Interesse in den Datenhistogramm zu definieren,
Weiterleiten des Parametersatzes an einen Algorithmus, der zum Erzeugen einer zweiten Transferfunktion auf Basis der ersten Transferfunktion ausgebildet ist;
Erzeugen (S103) einer zweiten Transferfunktion (107) auf Basis der ersten Transferfunktion und des ausgewählten Parametersatzes mit dem Algorithmus, wobei der Bereich von Interesse zum Manipulieren von Steuerpunkten durch den Algorithmus bevorzugt wird; und
Darstellen (S106) des Volumendatensatzes mittels der zweiten Transferfunktion (107).

2. Verfahren nach Anspruch 1, wobei die erste oder zweite Transferfunktion (107) eine stückweise lineare Funktion ist.

3. Verfahren nach einem der vorangehenden Ansprüche, wobei der Parametersatz aus einer Mehrzahl vorgegebener Parametersätze auswählbar ist.

4. Verfahren nach einem der vorangehenden Ansprüche, wobei der Parametersatz auf Basis einer graphischen Darstellung der ersten Transferfunktion auswählbar ist.

5. Verfahren nach einem der vorangehenden Ansprüche, wobei die erste Transferfunktion aus einer Mehrzahl vorgegebener Transferfunktionen auswählbar ist.

6. Verfahren nach einem der vorangehenden Ansprüche, wobei die erste Transferfunktion aus einem Teilbereich einer stückweise linearen Funktion auswählbar ist.

7. Verfahren nach einem der vorangehenden Ansprüche, wobei eine Mehrzahl an zweiten Transferfunktionen auf Basis der ersten Transferfunktion und des ausgewählten Parametersatzes erzeugt wird.

8. Verfahren nach Anspruch 7, wobei für jede der zweiten Transferfunktionen ein Vorschaubild erzeugt wird.

9. Verfahren nach Anspruch 8, wobei das Vorschaubild auswählbar ist, um ein Darstellen des Volumendatensatzes mit der jeweiligen zweiten Transferfunktion zu bewirken.

10. Verfahren nach Anspruch 9, wobei der Volumendatensatz mit der ersten Transferfunktion zeitgleich zu dem Volumendatensatz mit der zweiten Transferfunktion dargestellt wird.

11. Verfahren nach einem der vorangehenden Ansprüche, wobei die zweite Transferfunktion durch ein Ändern der Position eines Steuerpunktes auf der horizontalen oder vertikalen Achse der ersten Transferfunktion erzeugt wird.

12. Verfahren nach einem der vorangehenden Ansprüche, wobei die zweite Transferfunktion durch ein Ändern der Farbe eines einzelnen Steuerpunktes der ersten Transferfunktion erzeugt wird oder die zweite Transferfunktion durch ein Ändern des Beginns und/oder Endes der ersten Transferfunktion erzeugt wird.

13. Verfahren nach einem der vorangehenden Ansprüche, wobei die zweite Transferfunktion durch eine Streckung oder Stauchung der ersten Transferfunktion auf der horizontalen oder vertikalen Achse erzeugt wird.

14. Medizinisches Gerät zum Durchführen des Verfahrens nach einem der vorangehenden Ansprüche.

## Claims

1. Method for visually highlighting spatial structures in a volume data record, having the steps:
providing (S101) a first transfer function (107) for mapping data values of the volume data record to colour values of a visual representation (101), wherein the first transfer function is made up of one or more piecewise linear segments, each piecewise linear segment having control points which define a position in the data histogram of the data values and visualisation parameters to which the data values are mapped;
providing (S102) a selection option for a user to select a parameter set, in which the parameter set can be selected by marking a region in a graphical representation (101) of the volume data record;
selecting a parameter set by a user marking a region in a graphical representation of the volume data record, in that a represented DVR rendering is indicated or coloured and regions to be changed are selected, in order for this to define a region of interest in the data histogram,
forwarding the parameter set to an algorithm, which is embodied to generate a second transfer function on the basis of the first transfer function;
generating (S103) a second transfer function (107) using the algorithm on the basis of the first transfer function and the selected parameter set, wherein the region of interest is preferred by the algorithm for the manipulation of control points; and
representing (S106) the volume data record by means of the second transfer function (107).

2. Method according to claim 1, wherein the first or second transfer function (107) is a piecewise linear function.

3. Method according to one of the preceding claims, wherein the parameter set can be selected from a number of predefined parameter sets.

4. Method according to one of the preceding claims, wherein the parameter set can be selected on the basis of a graphical representation of the first transfer function.

5. Method according to one of the preceding claims, wherein the first transfer function can be selected from a number of predefined transfer functions.

6. Method according to one of the preceding claims, wherein the first transfer function can be selected from a sub-region of a piecewise linear function.

7. Method according to one of the preceding claims, wherein a number of second transfer functions are generated on the basis of the first transfer function and the selected parameter set.

8. Method according to claim 7, wherein a preview image is generated for each of the second transfer functions.

9. Method according to claim 8, wherein the preview image can be selected to bring about a representation of the volume data record with the respective second transfer function.

10. Method according to claim 9, wherein the volume data record with the first transfer function is represented at the same time as the volume data record with the second transfer function.

11. Method according to one of the preceding claims, wherein the second transfer function is generated by changing the position of a control point on the horizontal or vertical axis of the first transfer function.

12. Method according to one of the preceding claims, wherein the second transfer function is generated by changing the colour of an individual control point of the first transfer function or the second transfer function is generated by changing the start and/or end of the first transfer function.

13. Method according to one of the preceding claims, wherein the second transfer function is generated by extending or compressing the first transfer function on the horizontal or vertical axis.

14. Medical device for performing the method according to one of the preceding claims.

## Revendications

1. Procédé de mise en évidence visuelle de structures spatiales dans un ensemble de données de volume, comprenant les stades :
on se procure (S101) une première fonction (107) de transfert pour la représentation de valeurs de données de l'ensemble de données de volume sur des valeurs de couleur d'une représentation (101) visuelle, dans lequel la première fonction de transfert est composée d'un ou de plusieurs segments linéaires morceau par morceau, dans lesquels chaque segment linéaire morceau par morceau a des points de commande, qui définissent une position dans l'histogramme de données des valeurs de données et des paramètres de visualisation, sur lesquels les valeurs de données sont représentées ;
on se procure (S102) une possibilité de sélection pour une sélection d'un ensemble de paramètres par un utilisateur, dans lequel l'ensemble de paramètres peut être choisi par marquage d'une partie dans une représentation (101) graphique de l'ensemble de données de volume ;
sélection, par un utilisateur, d'un ensemble de paramètres par marquage d'une partie dans une représentation graphique de l'ensemble de données de volume, par le fait que l'on indique ou l'on peint sur un rendu DVR représenté et on choisit, par rapport à d'autres parties, afin de définir ainsi une partie à laquelle on s'intéresse dans l'histogramme de données ;
acheminement de l'ensemble de paramètres à un algorithme, qui est constitué pour la production d'une deuxième fonction de transfert, sur la base de la première fonction de transfert ;
production (S103) d'une deuxième fonction (107) de transfert sur la base de la première fonction de transfert et de l'ensemble de paramètres sélectionné avec l'algorithme, dans lequel la région à laquelle on s'intéresse est préférée pour la manipulation des points de commande par l'algorithme ; et
représentation (S106) de l'ensemble de données de volume au moyen de la deuxième fonction (107) de transfert.

2. Procédé suivant la revendication 1, dans lequel la première ou la deuxième fonction (107) de transfert est une fonction linéaire morceau par morceau.

3. Procédé suivant l'une des revendications précédentes, dans lequel l'ensemble de paramètres peut être choisi parmi une pluralité d'ensembles de paramètres donnés à l'avance.

4. Procédé suivant l'une des revendications précédentes, dans lequel l'ensemble de paramètres peut être choisi sur la base d'une représentation graphique de la première fonction de transfert.

5. Procédé suivant l'une des revendications précédentes, dans lequel la première fonction de transfert peut être choisie parmi une pluralité de fonctions de transfert données à l'avance.

6. Procédé suivant l'une des revendications précédentes, dans lequel la première fonction de transfert peut être choisie à partir d'une zone partielle d'une fonction linéaire morceau par morceau.

7. Procédé suivant l'une des revendications précédentes, dans lequel on produit une pluralité de deuxièmes fonctions de transfert sur la base de la première fonction de transfert et de l'ensemble de paramètres sélectionné.

8. Procédé suivant la revendication 7, dans lequel on produit un pré-diagramme pour chacune des deux fonctions de transfert.

9. Procédé suivant la revendication 8, dans lequel on peut choisir le pré-diagramme afin de provoquer une représentation de l'ensemble de données de volume par la deuxième fonction de transfert respective.

10. Procédé suivant la revendication 9, dans lequel on représente l'ensemble de données de volume par la première fonction de transfert en même temps que l'ensemble de données en volume par la deuxième fonction de transfert.

11. Procédé suivant l'une des revendications précédentes, dans lequel on produit la deuxième fonction de transfert par une modification de la position d'un point de commande sur l'axe horizontal ou vertical de la première fonction de transfert.

12. Procédé suivant l'une des revendications précédentes, dans lequel on produit la deuxième fonction de transfert par une modification de la couleur d'un point de commande individuel de la première fonction de transfert ou on produit la deuxième fonction de transfert par une modification du début et/ou de la fin de la première fonction de transfert.

13. Procédé suivant l'une des revendications précédentes, dans lequel on produit la deuxième fonction de transfert par une extension ou une compression de la première fonction de transfert sur l'axe horizontal ou vertical.

14. Appareil médical pour effectuer le procédé suivant l'une des revendications précédentes.
